# EUROPÄISCHE PATENTSCHRIFT

(11) **EP 0 761 575 B1**
(45) Veröffentlichungstag und Bekanntmachung des Hinweises auf die Patenterteilung: **02.06.1999**
(21) Anmeldenummer: 96250176.3
(22) Anmeldetag: 15.08.1996
(51) Int. Cl.: B65G 47/80

(54) **Vorrichtung zum Überführen von Fördergut, insbesondere von Werkstückträgern**
Device for transferring articles, especially workpiece-carriers
Dispositif pour le transfert d'objets, notamment de porte-pièces

(30) Priorität: 05.09.1995 DE 19534500
(43) Veröffentlichungstag der Anmeldung: 12.03.1997
(73) Patentinhaber: MANNESMANN Aktiengesellschaft, 40213 Düsseldorf (DE)
(72) Erfinder: Nüssle, Gerhard, D-71263 Weil der Stadt (DE); Kunz, Andreas, D-99610 Sömmerda (DE)
(74) Vertreter: Meissner, Peter E., Dipl.-Ing.

(56) Entgegenhaltungen:
- EP-A- 0 648 696
- DE-B- 1 141 590
- DE-U- 1 969 064

## Beschreibung

Die Erfindung betrifft eine Vorrichtung zum Überführen von Fördergut, insbesondere von Werkstückträgern gemäß dem Oberbegriff des Anspruchs 1.

Aus der europäischen Patentanmeldung EP 0 648 696 A1 ist eine Vorrichtung zum Ein- und Ausschleusen bzw. Umlenken von Gegenständen bei Transportstrecken bekannt. Unter Transportstrecken werden hier Förderbahnen für insbesondere auf Werkstückträgern gelagerte Werkstücke verstanden, die im wesentlichen aus zwei parallel zueinander und mit Abstand voneinander verlaufenden Förderelementen gebildet sind, von denen die Werkstückträger an ihren seitlichen Bereichen getragen und geführt werden. Die Förderelemente sind als Gurt- oder Staurollenkettenförderer ausgebildet und können wahlweise kombiniert werden.

Das Ein- und Ausschleusen bzw. Umlenken der Werkstückträger erfolgt über einen zwischen den Transportstrecken angeordneten drehbaren und kreisrunden Teller, der mit einem stellbaren Ablenkelement zusammenwirkt. Das Ablenkelement hat die Aufgabe, ein von einer zuführenden Transportstrecke auf den Teller übergebenen Werkstückträger von dem Teller herunter in Richtung einer weiterführenden Transportstrecke zu leiten. Die Förderebenen des Tellers und der Transportstrecken sind in etwa auf gleichem Höhenniveau angeordnet. Der Teller ragt seitlich in die gedachten Verlängerungen der an den Tellern angrenzenden Transportstrecken soweit hinein, daß der Rand des Tellers mit geringem Abstand zu einem durchgehenden der beiden Förderelemente der Transportstrecken angeordnet ist und das andere Förderelement im Bereich des Schlepptellers unterbrochen ist. Die Ablenkelemente sind in der Draufsicht auf den Teller gesehen keilförmig ausgebildet und an ihrem breiten Ende um eine vertikale Achse schwenkbar in eine Ablenkstellung und eine Ruhestellung mit Führungsfunktion verschwenkbar. Die Schwenkachse für das Ablenkelement befindet sich außerhalb des Tellers. Für jede weiterführende Transportstrecke ist jeweils ein Ablenkelement vorgesehen, das in seiner Ablenkstellung das Mitführen des Werkstückträgers von dem Teller verhindert und gleichzeitig den Werkstückträger unter Ausnutzung der Bewegung des Tellers in Richtung der weiterführenden Transportstrecke ablenkt, bis dieser von dessen angetriebenen Rollen bzw. Gurt erfaßt und somit von dem Teller vollständig heruntergefördert wird.

Diese Vorrichtung zum Ein- und Ausschleusen bzw. Umlenken von Werkstückträgern erweist sich als nachteilig, da für jede weiterführende Transportstrecke ein eigenes Ablenkelement benötigt wird. Darüber hinaus wird durch die Anlenkung der Ablenkelemente außerhalb des Tellers zusätzlicher Einbauraum erforderlich.

Eine weitergehende Lösung ist aus der deutschen Auslegeschrift DE-AS 11 41 590 bekannt, die eine Mehrwegfördereinrichtung für Stückgüter, insbesondere Kisten, Pakete oder Säcke betrifft, die im wesentlichen aus einer sich drehenden Verteilerscheibe und hieran angrenzenden mehreren Zubringer- und Abgangsbandförderern besteht. Um die von den Zubringerbandförderern auf die Verteilerscheibe übergebenen Fördergüter gezielt auf ein vorgewähltes Abgangsförderband zu transportieren, ist bis dahin ein zentral im Bereich der Drehachse der Verteilerscheibe gelagerter und sich diametral über die ganze Verteilerscheibe erstreckender Abweiser vorgesehen, von dem das auf der Verteilerscheibe transportierte Fördergut in Richtung des vorgewählten Abgangsbandförderers geleitet wird. Der Abweiser ist zwischen zwei feststehenden Anschlägen schwenkbar gelagert und wird in Abhängigkeit von der Drehrichtung der Verteilerscheibe von dem auf der Verteilerscheibe aufliegenden Fördergut in Richtung eines der Anschläge verschwenkt, so daß je nach Drehrichtung der Verteilerscheibe das Fördergut in eine der beiden Abgangsförderbahnen geführt wird.

Die Antriebsart des doppelarmig ausgebildeten Abweisers erweist sich als nachteilig, da eine Umschaltung zwischen den beiden weiterführenden Abgangsförderbahnen nur durch eine Drehrichtungsumschaltung der Verteilerscheibe und zusätzlich mit Hilfe des Fördergutes erzielt werden kann. Die Umschaltung des Abweisers ist somit abhängig von der Beschaffenheit des Fördergutes, insbesondere dessen Oberfläche, Gewicht und Form sowie dessen radialer Lage auf der Verteilerscheibe.

Ausgehend von diesem Stand der Technik liegt der Erfindung die Aufgabe zugrunde, eine platzsparende und konstruktiv einfache Vorrichtung zum Überführen von Fördergut, insbesondere von Werkstückträgern zu schaffen.

Diese Aufgabe wird bei einer Vorrichtung zum Überführen von Fördergut durch die im Anspruch 1 aufgeführten Merkmale gelöst. Vorteilhafte Ausgestaltungen der Vorrichtung sind in den Unteransprüchen 2 bis 9 angegeben.

Erfindungsgemäß wird durch die Verwendung ausschließlich eines einzigen Ablenkelementes zur Führung des Förderguts von dem Schleppteller herunter in Richtung einer weiterführenden Förderbahn und dessen Anlenkung über eine innerhalb der ringförmigen Transportfläche des Schlepptellers angeordneten Schwenkachse erreicht, daß die Vorrichtung zum Überführen von Fördergut, insbesondere von Werkstückträgern konstruktiv sehr einfach ausgebildet werden kann. Hierbei sind die Achsen des Schlepptellers und des Ablenkelements parallel zueinander ausgerichtet. Durch die zentrale Lagerung des Ablenkelements ist nur ein einziges Ablenkelement ausreichend, um das Fördergut in verschiedene weiterführende Förderbahnen, die jeweils in unterschiedliche Richtungen weisen, führen zu können. Darüber hinaus wird durch die zentrale Lagerung der vorhandene Raum besser genutzt, der sonst nur zur Lagerung des Schlepptellers oder Anordnung eines scheibenförmigen Elements zur Führung der Werkstückträger an der Innenseite im Bereich des Schlepptellers dient. Außerdem wird durch die zentrale Lagerung die Personensicherheit erhöht, da gegenüber außerhalb des Schlepptellers angelenkten Ablenkelementen keine Scherbereiche vorhanden sind. Diese Vorteile lassen sich dadurch optimieren, daß die Schwenkachse des Ablenkelements koaxial zur Drehachse des Schlepptellers ausgerichtet wird, da hierdurch das Ablenkelement in jeder Winkelstellung eine ausreichende Länge aufweist um sicher die Werkstückträger in die angrenzenden Förderbahnen zu führen.

Als besonders vorteilhaft erweist sich die Ausbildung des Ablenkelements als einseitig gelagerter Arm, dessen Außenkontur in Draufsicht auf den Schleppteller gesehen im Bereich der Drehachse einen halbkreisförmigen Abschnitt zur Führung des Förderguts auf dem Drehteller und hiervon ausgehend einen sich verjüngenden armförmigen Abschnitt zur Ablenkung des Förderguts in Richtung der weiterführenden Förderbahnen aufweist. Der armförmige Abschnitt des Ablenkelements endet im Bereich des Randes des Schlepptellers und weist in diesem Endbereich eine Breite auf, die so gewählt ist, daß in Förderrichtung der weiterführenden Förderbahnen gesehen das Ablenkelement mit einer der Führungsschienen der weiterführenden Förderbahn fluchtet.

In weiterer Ausgestaltung der Erfindung ist vorgesehen, daß bei Einsatz der erfindungsgemäßen Überführungsvorrichtung für Fördersysteme mit mindestens zwei zuführenden und zwei weiterführenden Förderbahnen das Ablenkelement als in der Mitte gelagerter Doppelarm ausgebildet ist, dessen Außenkontur in Draufsicht auf den Schleppteller gesehen im Bereich der Drehachse einen breiteren Bereich zur Führung des Förderguts auf dem Schleppteller und hiervon ausgehend zwei gegenüberliegende sich verjüngende Abschnitte zur Ablenkung des Förderguts aufweist. Die Ausbildung der verjüngenden Abschnitte bezüglich deren Länge und Breite entspricht der der vorher beschriebenen Ausführungsform. Dieses Fördersystem weist eine Anordnung der weiterführenden Förderbahnen in der Art auf, daß die Arme des Ablenkelements in ihrer gemeinsamen Ablenkstellung jeweils das Fördergut in Richtung einer zugeordneten weiterführenden Förderbahn leiten.

Des weiteren erweist sich als besonders vorteilhaft, daß das Ablenkelement keinen eigenen Antrieb benötigt, da dessen Antrieb über eine lösbare Verbindung mit dem permanent angetriebenen Schleppteller erfolgt. Diese lösbare Verbindung ist über ein an dem Ablenkarm angeordnetes Gleitelement reibschlüssig ausgebildet. Mittels eines Halteelements kann die reibschlüssige Verbindung zwischen dem Gleitelement und dem Schleppteller unterbrochen werden, so daß das Gleitelement auf den Schleppteller gleitet, wenn das Ablenkelement sich in einer seiner Ablenkpositionen befindet. Vorzugsweise ist das Halteelement als vertikal bewegbarer Anschlag ausgebildet, der zum Halten des Anlenkelements in die Bewegungsbahn des über den Rand des Schlepptellers hinausragenden Endes des Ablenkelements einfahrbar ist.

Besonders geeignet ist die erfindungsgemäße Vorrichtung zum Überführen von Fördergut zur Verwendung mit Förderbahnen, die jeweils aus zwei parallel zueinander verlaufenden und voneinander beabstandeten Förderelementen bestehen, die als Staurollenketten- oder Gurtförderer ausgebildet sind und das Fördergut an ihren seitlichen Bereichen tragen und führen. In Verbindung mit derartig ausgebildeten Förderbahnen ist der Schleppteller in die gedachten Verlängerungen der Transportflächen der angrenzenden Förderbahnen seitlich hineinragend angeordnet, so daß bei einer zu- und einer weiterführenden Förderbahn in einer Richtung eines der als Staurollenketten- oder Gurtförderer ausgebildeten Förderelemente unterbrochen und das andere dieser Förderelemente durchgehend neben dem Schleppteller vorbeigeführt wird.

Ein Ausführungsbeispiel der Erfindung ist in der Zeichnung dargestellt und wird im folgenden näher beschreiben. Es zeigen:
- Fig. 1: eine Draufsicht auf eine Vorrichtung zum Überführen von Werkstückträgern von einer zu- auf zwei weiterführende Förderbahnen und
- Fig. 2: eine Draufsicht auf eine Vorrichtung zum Überführen von Werkstückträgern von zwei zu- auf zwei weiterführende Förderbahnen.

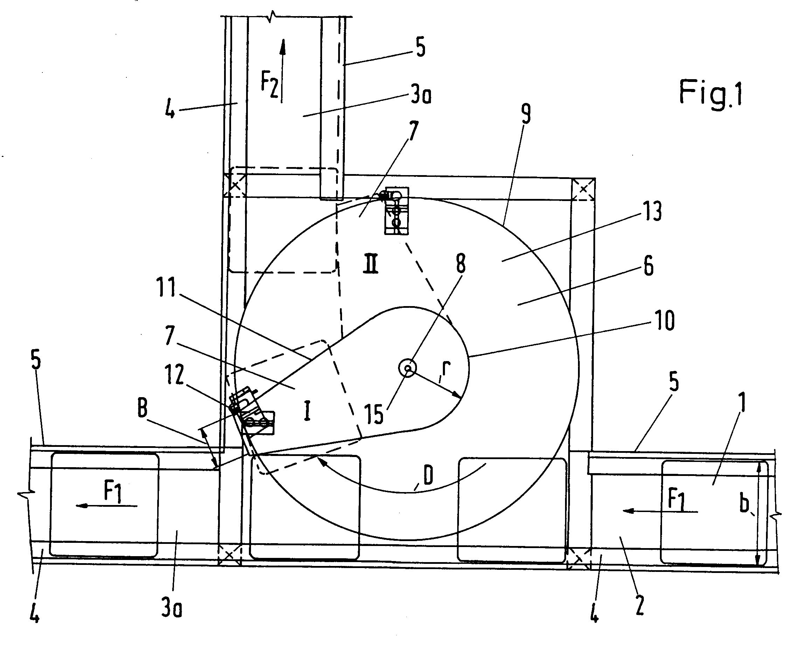

Die Figur 1 zeigt eine Draufsicht auf eine Vorrichtung zum Überführen von als Werkstückträger ausgebildetem Fördergut 1 von einer zuführenden Förderbahn 2 auf eine von zwei weiterführenden Förderbahnen 3a, 3b. Die Förderbahnen 2, 3a und 3b sind als sogenannte Doppelgurtförderer ausgebildet, die im wesentlichen aus zwei länglichen Förderelementen 4 bestehen, die parallel zueinander und mit Abstand voneinander sowie jeweils als angetriebene Gurtförderer ausgebildet sind. Der Abstand der Förderelemente 4 zueinander ist so gewählt, daß das Fördergut 1 in Förderrichtung F gesehen jeweils an seinen Seiten von den Förderelementen 4 getragen wird und zusätzlich über parallel zu den Förderelementen 4 geführte Führungsschienen 5 seitlich geführt wird. Die Förderelemente 4 können auch als Staurollenkettenförderer bzw. in Kombination mit Gurtförderer, wobei zumindest ein Förderelement 4 angetrieben ist, ausgebildet werden.

Die Vorrichtung zum Überführen des Förderguts 1 ist zwischen den Förderbahnen 2, 3a und 3b angeordnet und besteht im wesentlichen aus einem Schleppteller 6 und einem Ablenkelement 7. Der kreisrunde Schleppteller 6 ist an einer Drehachse 8 zentral gelagert und von einem nicht dargestellten Antrieb in einer vorgegebenen Drehrichtung D antreibbar. Die Transportflächen des Schlepptellers 6 und der Förderelemente 4 sind weitestgehend auf einem Höhenniveau und horizontal ausgerichtet. Die zuführende Förderbahn 2 und die weiterführende Förderbahn 3a sind in einer gemeinsamen Förderrichtung F₁ angeordnet und in dieser Förderrichtung gesehen fluchtend zueinander ausgerichtet. Der Schleppteller 6 ist derart in die durch die Förderbahnen 2 und 3a gebildete Förderstrecke seitlich hineinragend angeordnet, daß die Förderelemente 4 der Förderbahnen 2 und 3a, die auf der der Drehachse 8 des Schlepptellers 6 zugewandten Seite liegen, unterbrochen sind und jeweils unmittelbar vor bzw. nach dem Rand 9 des Schlepptellers 6 enden bzw. beginnen. Die Förderelemente 4, die auf der der Drehachse 8 des Schlepptellers 6 abgewandten Seite der Förderbahnen 2 und 3a liegen, sind dagegen durchgehend und mit geringem Abstand tangential an dem äußeren Rand 9 des Schlepptellers 6 vorbeigeführt. Die zweite weiterführende Förderbahn 3b ist mit ihrer Förderrichtung F₂ rechtwinklig zur Förderrichtung F₁ der Förderbahnen 2 und 3a angeordnet. Hierbei ist wiederum die Förderbahn 3b mit ihren Förderelementen 4 so zu dem Schleppteller 6 angeordnet, daß das der Drehachse 8 des Schlepptellers 6 abgewandte und somit äußere Förderelement 4 mit seiner Führungsschiene 5 mit geringem tangentialen Abstand zum Rand 9 des Schlepptellers 6 angeordnet ist. Das innere Förderelement 4 mit seiner Führungsschiene 5 ist entsprechend der Breite des Förderguts 1 nach innen zur Drehachse 8 des Schlepptellers 6 hin versetzt angeordnet und beginnt an dem Schleppteller 6 angrenzend.

Das zentral an einer Schwenkachse 15 und koaxial zur Drehachse 8 gelagerte Ablenkelement 7 weist in Draufsicht auf den Schleppteller 6 gesehen einen halbkreisförmigen Abschnitt 10 und einen armförmigen Abschnitt 11 auf. Der halbkreisförmige Abschnitt befindet sich im Bereich der Drehachse 8 des Ablenkelements 7 und weist einen Radius r mit Ursprung in der Drehachse 8 auf, dessen Betrag so gewählt ist, daß zwischen den Führungsschienen 5 der Förderbahnen 2, 3a und 3b und der Außenkontur des halbkreisförmigen Abschnitts 10 ein Abstand verbleibt, der größer ist als die Breite b des Förderguts 1. Hierdurch wird erreicht, daß das Fördergut 1 einerseits sich nicht zwischen den Führungsschienen 5 und dem halbkreisförmigen Abschnitt 10 verklemmen kann und andererseits durch den ausreichenden Radius r ein Verdrehen des Förderguts 1 verhindert wird. Außerdem wird somit die wirksame Transportfläche 13 des Schlepptellers 6 auf einen ringförmigen Bereich begrenzt. Ausgehend von dem halbkreisförmigen Abschnitt 10 verjüngt sich das Ablenkelement 7 linear, bis in dessen Endbereich eine Breite B erreicht wird, die so gewählt ist, daß das Ablenkelement 7 mit seinem Endbereich in Förderrichtung F₁, F₂ der weiterführenden Förderbahn 3a, 3b gesehen mit dessen innerer Führungsschiene 5 fluchtet.

Der Antrieb des Ablenkelements 7 aus einer ersten Ablenkstellung 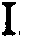 , in der das Fördergut 1 in die erste weiterführende Förderbahn 3a weitergeleitet wird, in eine zweite Ablenkstellung 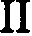 , in der das Fördergut in die zweite weiterführende Förderbahn 3b weitergeleitet wird, erfolgt über eine reibschlüssige Verbindung des Ablenkelements 7 mit dem drehangetriebenen Schleppteller 6. Die reibschlüssige Verbindung erfolgt über ein nicht dargestelltes Gleitelement, das an der Unterseite des Ablenkelements 7 angeordnet ist und auf der Oberfläche des Schlepptellers 6 aufliegt. Somit besteht eine permanente Antriebsverbindung zwischen dem Ablenkelement 7 und dem Schleppteller 6. Diese Antriebsverbindung kann in den Ablenkpositionen 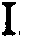 , 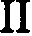 durch ein Halteelement unterbrochen werden. Das Halteelement ist als über beispielsweise Pneumatikzylinder stellbarer Anschlag 12 ausgebildet, der zum Anhalten des Ablenkelements 7 vertikal nach oben am Rand 9 des Schlepptellers 6 vorbei in die Bewegungsbahn des Ablenkelements 7 hinein hebbar ist.

Zur Verdeutlichung des Aufbaus der Vorrichtung zum Überführen von Fördergut 1 wird nachfolgend dessen Betriebsweise näher erläutert.

Für den Fall, daß Fördergut 1 von der zuführenden Förderbahn 2 auf die erste weiterführende Förderbahn 3a geleitet werden soll, wird zunächst das Ablenkelement 7 in der ersten Ablenkposition 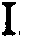 über den Anschlag 12 angehalten. Das auf den beiden Förderelementen 4 der Förderbahn 2 transportierte Fördergut 1 erreicht zunächst mit seiner rechten vorderen Seite - in Förderrichtung F₁ gesehen - den Rand 9 des Schlepptellers 6 und wird auf diesen aufgeschoben. Wiederum in Förderrichtung F₁ gesehen wird das Fördergut 1 bis zum Erreichen der Höhe der Drehachse 8 des Schlepptellers 6 das Fördergut 1 über den Reibschluß mit dem Schleppteller 6 in Richtung der äußeren Führungsschiene 5 der Förderbahn 2 geschoben. Wenn diese Position überschritten wird, erfolg` ein Mitnehmen des Förderguts 1 durch den Schleppteller 6 in dessen Drehrichtung D. Durch das in der ersten Ablenkposition 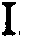 angehaltene Ablenkelement 7 wird das Fördergut 1 von dem Schleppteller heruntergeführt und somit wieder auf die angetriebenen Förderelemente 4 der weiterführenden Förderbahn 3a geschoben. Dieser Vorgang wird dadurch begünstigt, daß das Ablenkelement 7 im Endbereich seines armförmigen Abschnittes 11 eine Breite B aufweist, die so gewählt ist, daß in Förderrichtung F₁ gesehen der letzte Bereich des Ablenkelements 7 mit der inneren Führungsschiene 5 der weiterführenden Förderbahn 3a fluchtet. Somit wird das Fördergut 1 sicher auf die weiterführende Förderbahn 3a geleitet. Zur Unterstützung der Führungsbewegung sind die zu fördernden Werkstückträger (Fördergut 1) seitlich mit nicht dargestellten Führungsrollen versehen.

Für den Fall, daß das Fördergut 1 von der zuführenden Förderbahn 2 auf die weiterführende Förderbahn 3b überführt werden soll, wird das Ablenkelement in der Ablenkposition 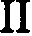 angehalten. Das von der zuführenden Förderbahn 2 herangeförderte Fördergut 1 verhält sich wie zuvor beschrieben bis zum Erreichen der Position, in dem das Fördergut 1 von dem äußeren Förderelement 4 der Förderbahn 2 nahezu vollständig auf den Schleppteller 6 gezogen und in Drehrichtung D in Richtung der weiterführenden Förderbahn 3b gefördert wird. Auf dem Weg dorthin wird das Fördergut 1 zwischen dem halbkreisförmigen Abschnitt 10 des Ablenkelements 7 und der äußeren Führungsschiene 5 der weiterführenden Förderbahn 3b geführt. Anschließend erfolgt wiederum ein Leiten des Förderguts 1 durch den armförmigen Abschnitt 11 in Richtung der weiterführenden Förderbahn 3b, bis die Vorderkante des Förderguts 1 von den Förderelementen 4 der weiterführenden Förderbahn 3b erfaßt wird und somit das Fördergut 1 von dem Schleppteller 6 hinuntergezogen werden kann.

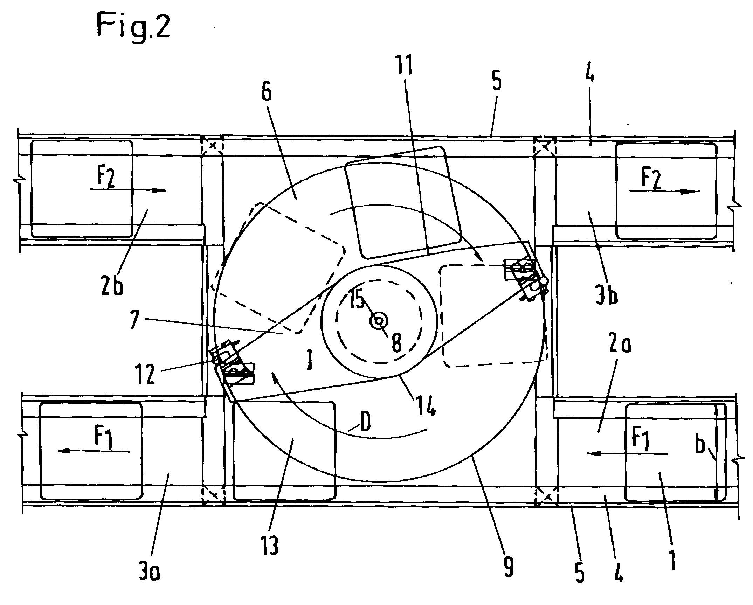

In Figur 2 ist ein weiteres Ausführungsbeispiel der Vorrichtung zum Überführen von Fördergut gezeigt, wobei diese mit jeweils zwei zuführenden Förderbahnen 2a und 2b und zwei weiterführenden Förderbahnen 3a und 3b kombiniert ist. Jeweils eine zu-und eine weiterführende Förderbahn 2,3 sind in einer gemeinsamen Förderrichtung F₁ und F₂ angeordnet. Hierbei sind die Förderrichtungen F₁ und F₂ gegenläufig und parallel zueinander ausgerichtet. Zwischen den Förderbahnen 2 und 3 ist wiederum ein Schleppteller 6 mit einem zentral gelagerten Ablenkelement 7 angeordnet. Hierbei ist jedoch das Ablenkelement 7 doppelarmförmig ausgebildet und weist in der Draufsicht auf den Schleppteller 6 gesehen eine Außenkontur auf, die im Bereich der Drehachse 8 einen breiteren Bereich 14 zur Führung des Förderguts 1 auf dem Schleppteller 6 aufweist und hiervon ausgehend zwei sich gegenüberliegende und jeweils verjüngende armförmige Abschnitte 11 zur Ablenkung des Förderguts 1 angeordnet ist. Die Breite des breiteren Bereichs 14 des Ablenkelements 7 ist nach den gleichen Kriterien wie der Radius r des halbkreisförmigen Abschnitts 10 des Ablenkelements 7 gemäß Figur 1 ausgebildet worden. Die Anordnung der Förderbahn 2, 3 und die Ausbildung des doppelarmigen Ablenkelements 7 sind so gewählt, daß das Ablenkelement 7 in der einzigen Ablenkposition 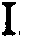 mit seinen armförmigen Abschnitten 11 jeweils das Fördergut 1 von den zuführenden Förderbahnen 2a, 2b zu den weiterführenden Förderbahnen 3a, 3b mit gleicher Förderrichtung F₁, F₂ leitet. Um eine Übergabe des Förderguts 1 von einer zuführenden Förderbahn 2a, 2b auf eine weiterführende Förderbahn 3a, 3b mit anderer Förderrichtung F₁, F₂ mittels des Schlepptellers 6 und des Ablenkelements 7 durchzuführen, werden dessen Halteelemente nach Einfahrt des Förderguts 1 auf den Schleppteller 6 gelöst, so daß das Fördergut 1 und das Ablenkelement 7 sich gleichzeitig mit dem Schleppteller 6 in Drehrichtung D bewegen. Anschließend wird, nachdem das Ablenkelement 7 sich um 180° gedreht hat, dieses wieder in der ersten Ablenkstellung 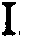 arretiert, und das Fördergut 1, das sich nun wieder relativ zu dem Ablenkelement 7 auf dem Schleppteller 6 bewegt, wie zuvor beschrieben auf die weiterführende Förderbahn 3b in Förderrichtung F₂ geleitet.

Für weitere Anwendungsfälle ist es auch möglich, zwei oder mehrere Ablenkelemente 7, ausgeführt gemäß Figur 1, an einer Drehachse 8 zu lagern und diese durch Anordnung in verschiedenen horizontalen Ebenen aneinander vorbeifahrbar zu gestalten.

## Patentansprüche

1. Vorrichtung zum Überführen von Fördergut, insbesondere von Werkstückträgern von mindestens einer zuführenden Förderbahn auf eine von mindestens zwei weiterführenden Förderbahnen mit einem um eine Drehachse angetriebenen und die Förderbahnen verbindenden Schleppteller, der eine ringförmige Transportfläche für das Fördergut aufweist, und mit einem um eine innerhalb der ringförmigen Transportfläche des Schlepptellers angeordneten Schwenkachse in den Förderweg des Förderguts auf dem Schleppteller bewegbaren Ablenkelement zur Führung des Fördergutes von dem Schleppteller auf eine der weiterführenden Förderbahnen,
dadurch gekennzeichnet,
daß das Ablenkelement (7) über eine lösbare Antriebsverbindung mit dem Schleppteller (6) zwischen den verschiedenen Ablenkpositionen ( 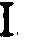 , 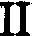 ) verschwenkbar ist.

2. Vorrichtung nach Anspruch 1,
dadurch gekennzeichnet,
daß die Schwenkachse (15) des Ablenkelements (7) koaxial zur Drehachse (8) des Schlepptellers (6) ausgerichtet ist.

3. Vorrichtung nach Anspruch 1 oder 2,
dadurch gekennzeichnet,
daß das Ablenkelement (7) als einseitig gelagerter Arm ausgebildet ist, dessen Außenkontur in Draufsicht auf den Schleppteller (6) gesehen im Bereich der Schwenkachse (15) einen halbkreisförmigen Abschnitt (10) zur Führung des Förderguts (1) auf dem Schleppteller (6) und hiervon ausgehend einen armförmigen Abschnitt (11) zur Ablenkung des Förderguts (1) aufweist, der im Bereich des äußeren Randes (9) des Schlepptellers (6) endet und in diesem Endbereich eine Breite aufweist, die derart gewählt ist, daß in Förderrichtung (F₁, F₂) der weiterführenden Förderbahn (3a, 3b) gesehen das Ablenkelement (7) in dieser Ablenkposition ( 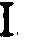 , 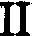 ) mit einer Führungsseite (5) der Förderbahn (3a, 3b) fluchtet, die der Drehachse (8) des Schlepptellers (6) zugewandt ist.

4. Vorrichtung nach Anspruch 2,
dadurch gekennzeichnet,
daß das Ablenkelement (7) als in dessen Mitte gelagerter Doppelarm ausgebildet ist, dessen Außenkontur in Draufsicht auf den Schleppteller (6) gesehen im Bereich der Drehachse (8) einen Bereich (14) zur Führung des Förderguts (1) auf dem Schleppteller (6) und hiervon ausgehend zwei gegenüberliegende Abschnitte (10, 11) zur Ablenkung des Förderguts (1) aufweist, die im Bereich des äußeren Randes (9) des Schlepptellers (6) enden und in diesem Endbereich eine Breite aufweisen, die derart gewählt ist, daß in Förderrichtung (F₁, F₂) der weiterführenden Förderbahn (3a, 3b) gesehen das Ablenkelement (7) mit einer Führungsseite (5) der Förderbahn (3a, 3b) fluchtet, die der Drehachse (8) des Schlepptellers (6) zugewandt ist.

5. Vorrichtung nach einem der Ansprüche 1 bis 4,
dadurch gekennzeichnet,
daß die Antriebsverbindung reibschlüssig über ein zwischem dem Ablenkelement (7) und dem angetriebenen Schleppteller (6) angeordnetes Gleitelement ausgebildet und das Ablenkelement (7) in den Ablenkpositionen ( 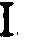 , 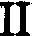 ) über ein Halteelement festlegbar ist.

6. Vorrichtung nach einem der Ansprüche 1 bis 5,
dadurch gekennzeichnet,
daß das Halteelement als stellbarer Anschlag (12) ausgebildet ist, der zum Halten des Ablenkelements (7) in die Bewegungbahn des Ablenkelements (7) bewegbar ist.

7. Vorrichtung nach einem der Ansprüche 1 bis 6,
dadurch gekennzeichnet,
daß die Förderbahnen (2, 3) jeweils aus zwei parallel zueinander verlaufenden und voneinander beabstandeten Förderelementen (4) besteht, die als Staurollenketten- oder Gurtförderer ausgebildet sind und das Fördergut (1) an ihren seitlich Bereichen tragen sowie seitlich über Führungsschienen (5) führen.

8. Vorrichtung nach Anspruch 7,
dadurch gekennzeichnet,
daß der Schleppteller (6) in gedachte Verlängerungen der Transportflächen der angrenzenden Förderbahnen (2a, 2b, 3a, 3b) hineinragt.

## Claims

1. Device for transferring articles, in particular workpiece carriers, from at least one feeding conveyer track to one of at least two advancing conveyer tracks having a drag plate driven about a rotary axis and connecting the conveyer tracks, which drag plate has an annular transporting surface for the articles, and having a deflecting element which can be moved about a pivoting axis arranged within the annular transporting surface of the drag plate into the conveying path of the articles on the drag plate for guiding the articles from the drag plate onto one of the advancing conveyer tracks,
characterised in that the deflecting element (7) can be swivelled between the different deflecting positions (I, II) via a releasable drive connection with the drag plate (6).

2. Device according to claim 1, characterised in that the pivoting axis (15) of the deflecting element (7) is aligned coaxially to the rotary axis (8) of the drag plate (6).

3. Device according to claim 1 or 2, characterised in that the deflecting element (7) is designed as an arm mounted on one side, the outer contour of which, seen in plan view of the drag plate (6), has in the region of the pivoting axis (15) a semi-circular section (10) for guiding the articles (1) on the drag plate (6) and starting from here has an arm-like section (11) for deflecting the articles (1) which terminates in the region of the outer edge (9) of the drag plate (6) and in this end region has a breadth which is selected such that, seen in the conveying direction (F₁, F₂) of the advancing conveyer track (3a, 3b), the deflecting element (7) in this deflecting position (I, II) aligns with a guide side (5) of the conveyer track (3a, 3b) which is facing the rotary axis (8) of the drag plate (6).

4. Device according to claim 2, characterised in that the deflecting element (7) is designed as a double arm mounted in its centre, the outer contour of which, seen in plan view of the drag plate (6), has in the region of the rotary axis (8) a region (14) for guiding the articles (1) on the drag plate (6) and starting from here two opposing sections (10, 11) for deflecting the articles (1) which terminate in the region of the outer edge (9) of the drag plate (6) and in this end region have a breadth which is selected such that, seen in the conveying direction (F₁, F₂) of the advancing conveyer track (3a, 3b), the deflecting element (7) aligns with a guide side (5) of the conveyer track (3a, 3b) which is facing the rotary axis (8) of the drag plate (6).

5. Device according to one of claims 1 to 4,
characterised in that the drive connection is designed to be frictionally engaged via a sliding element arranged between the deflecting element (7) and the driven drag plate (6) and the deflecting element (7) can be fixed in the deflecting positions (I, II) via a restraining element.

6. Device according to one of claims 1 to 5,
characterised in that the restraining element is designed as an adjustable stop (12) which can be moved into the path of motion of the deflecting element (7) to restrain the deflecting element (7).

7. Device according to one of claims 1 to 6,
characterised in that the conveyer tracks (2, 3) comprise in each case two conveying elements (4) running parallel to one another and at a distance from one another and are designed as static roller chain or belt conveyers and carry the articles (1) at their lateral regions as well as guide them laterally via guide rails (5).

8. Device according to claim 7, characterised in that the drag plate (6) projects into imaginary extensions of the transport surfaces of the adjacent conveyer tracks (2a, 2b, 3a, 3b).

## Revendications

1. Dispositif pour transmettre des matières à transporter, en particulier des supports de pièces, au moins à partir d'une voie de transport d'amenée à au moins l'une de deux voies de transport supplémentaire, comportant un disque de traction qui est entraîné autour d'un axe de rotation, qui relie les voies de transport, et qui comporte une face de transport annulaire pour les matières à transporter, et un élément de renvoi qui est mobile autour d'un axe de pivotement situé à l'intérieur de la face de transport annulaire du disque de traction, dans le trajet de transport des matières à transporter, pour guider les matières à transporter à partir du disque de traction sur une voie de transport supplémentaire,
caractérisé en ce que l'élément de renvoi (7) est pivotable entre les différentes positions de renvoi (I,II), par l'intermédiaire d'une liaison d'entraînement amovible avec le disque de traction (6).

2. Dispositif selon la revendication 1,
caractérisé en ce que l'axe de pivotement (15) de l'élément de renvoi (7) est orienté coaxialement à l'axe de rotation (8) du disque de traction (6).

3. Dispositif selon l'une des revendications 1 et 2,
caractérisé en ce que l'élément de renvoi (7) est réalisé sous forme d'un bras monté sur une face, dont le contour externe présente, en vue de dessus sur le disque de traction (6), dans la zone de l'axe de pivotement (15), un tronçon (10) en forme de demi-cercle, pour guider les matières à transporter (1) sur le disque de traction (6), et à partir de là, un tronçon (11) en forme de bras, pour renvoyer les matières à transporter (1), qui se termine dans la zone du bord externe (9) du disque de traction (6) et qui présente dans cette zone d'extrémité une largeur qui est choisie de sorte que, vu dans le sens de transport (F₁, F₂) de la voie de transport supplémentaire (3a,3b), l'élément de renvoi (7) est aligné, dans cette position de renvoi (I,II), avec la face de guidage (5) de la voie de transport (3a,3b), qui est en regard de l'axe de rotation (8) du disque de traction (6).

4. Dispositif selon la revendication 2,
caractérisé en ce que l'élément de renvoi (7) est réalisé sous forme d'un bras double monté en son milieu, dont le contour externe, en vue de dessus sur le disque de traction (6), dans la zone de l'axe de rotation (8), présente une zone (14) pour guider les matières à transporter (1) sur le disque de traction (6), et de là, deux tronçons opposés (10,11) pour renvoyer les matières à transporter, tronçons qui se terminent dans la zone du bord externe (9) du disque de traction (6) et qui présentent dans cette zone d'extrémité une largeur qui est choisie de sorte que, vu dans le sens de transport (F₁, F₂) de la voie de transport supplémentaire (3a,3b), l'élément de renvoi (7) est aligné avec une face de guidage (5) de la voie de transport (3a,3b), qui est en regard de l'axe de rotation (8) du disque de traction (6).

5. Dispositif selon l'une des revendications 1 à 4,
caractérisé en ce que la liaison d'entraînement est réalisée de façon à permettre un entraînement par friction, par l'intermédiaire d'un élément de glissement agencé entre l'élément de renvoi (7) et le disque de traction (6) entraîné, et l'élément de renvoi (7) peut être fixé dans les positions de renvoi (I,II) par l'intermédiaire d'un élément de maintien.

6. Dispositif selon l'une des revendications 1 à 5,
caractérisé en ce que l'élément de maintien est réalisé sous forme d'une butée (12) réglable, qui peut être déplacée dans la voie de mouvement de l'élément de renvoi (7), pour maintenir l'élément de renvoi (7).

7. Dispositif selon l'une des revendications 1 à 6,
caractérisé en ce que les voies de transport (2,3) sont constituées respectivement de deux éléments de transport (4) se déplacant parallèlement l'un par rapport à l'autre et écartés l'un de l'autre, qui sont réalisés sous forme d'un transporteur d'accumulation à rouleaux ou d'un transporteur à courroie, et qui portent les matières à transporter (1) à leurs zones latérales et les guident latéralement au moyen de rails de guidage (5).

8. Dispositif selon la revendication 7,
caractérisé en ce que le disque de traction (6) pénètre dans des prolongements imaginaires des faces de transport des voies de transport adjacentes (2a,2b,3a,3b).
